# EUROPÄISCHE PATENTSCHRIFT

(11) **EP 0 967 420 B1**
(45) Veröffentlichungstag und Bekanntmachung des Hinweises auf die Patenterteilung: **13.12.2000**
(21) Anmeldenummer: 98111698.1
(22) Anmeldetag: 25.06.1998
(51) Int. Cl.: F16H 63/36

(54) **Mitnahmekupplung in einem Schaltgestaenge**
Driving element for shift linkage
Elément d'entraînement pour une tringlerie de commande de boîte de vitesses

(43) Veröffentlichungstag der Anmeldung: 29.12.1999
(73) Patentinhaber: Ford Global Technologies, Inc., A subsidiary of Ford Motor Company, Dearborn, Michigan 48126 (US)
(72) Erfinder: Teschner, Lydia, 50769 Koeln (DE)
(74) Vertreter: Messulam, Alec Moses

(56) Entgegenhaltungen:
- EP-A- 0 699 854
- DE-A- 2 735 002
- DE-A- 19 539 599

## Beschreibung

Die Erfindung bezieht sich auf eine Mitnahmekupplung in einem Schaltgestänge der im Oberbegriff des Patentanspruchs 1 erläuterten Art.

Aus der DE 195 39 599 C2 ist eine Mitnahmekupplung in einem Schaltgestänge mit einem axial bewegbaren Schaltbauteil, der über eine Kugel/Raste-Kupplung ein weiteres, hülsenförmiges Schaltbauteil fallweise betätigt, bekannt.

Die bekannte Mitnahmekupplung in einem Schaltgestänge weist hierbei den Nachteil auf, daß sie nur zu einer kraftschlüssigen Verriegelung bzw. Kupplung der beiden miteinander zusammenwirkenden Schaltbauteile führt, wodurch eine erwünschte sequentielle Schaltweise nicht sichergestellt werden kann.

Die Aufgabe der Erfindung ist es, eine Mitnahmekupplung in einem Schaltgestänge der im Oberbegriff des Patentanspruchs erläuterten Art derart zu verbessern, daß eine formschlüssige Verriegelung zum Sicherstellen einer sequentiellen Schaltbetätigung bereitgestellt wird.

Gemäß der Erfindung wird diese Aufgabe gelöst, indem bei einer Mitnahmekupplung in einem Schaltgestänge der im Oberbegriff des Patentanspruchs 1 erläuterten Art, die im Kennzeichenteil des Patentanspruchs aufgezeigten Merkmale vorgesehen werden.

Dadurch, daß am einen axial bewegbaren Schaltbauteil die Raste für die in einer radialen Bohrung im weiteren, hülsenförmigen Schaltbauteil angeordnete Kugel angeordnet ist und am einen Schaltbauteil ein Anschlag vorgesehen ist, um den hülsenförmigen Schaltbauteil bei Bewegung in einer Richtung mitzunehmen und konzentrisch zum hülsenförmigen Schaltbauteil eine Steuerhülse angeordnet ist, die einen Abschnitt mit engerem Durchmesser und einen Abschnitt mit weiterem Durchmesser sowie einen Endanschlag für das hülsenförmige Schaltbauteil bei Bewegung in der anderen Richtung aufweist und wobei der Übergang vom engen zum weiteren Abschnitt der Steuerhülse die Neutrallage des hülsenförmigen Schaltbauteiles bestimmt, wird eine Mitnahmekupplung in einem Schaltgestänge geschaffen, die in einer Bewegungsrichtung eines ersten Schaltbauteiles einen weiteren Schaltbauteil verriegelt oder angekuppelt mitnimmt, diesen jedoch bei einer Bewegung in der anderen Richtung bei Erreichen der Neutrallage abkoppelt.

Die Erfindung wird anhand einer in der Zeichnung gezeigten Ausführungsform näher erläutert. Es zeigt:
- Fig. 1: einen vertikalen Schnitt durch eine erfindungsgemäße Mitnahmekupplung in einem Schaltgestänge;
- Fig. 2: einen Schnitt entlang der Linie II-II in Fig. 1;
- Fig. 3: einen Schnitt durch die Mitnahmekupplung nach Fig. 1 in ihrem Verriegelungszustand und ;
- Fig. 4: einen Schnitt entlang der Linie IV-IV in Fig. 3.

In den Figuren ist ein erstes Schaltbauteil 1, z.B. eine axial verschiebbare Schaltstange in einem zweiten, hülsenförmigen Schaltbauteil 2, z.B. in der Nabe einer Schaltgabel, in einer Innenbohrung 3 axial verschiebbar aufgenommen.

An dem ersten Schaltbauteil 1 ist eine Raste 4, z.B. in Form einer Ringnut und ein Anschlag 5, z.B. in Form eines Ringbundes, angeordnet.

In dem zweiten, hülsenförmigen Schaltbauteil 2 ist in einer radialen Bohrung 6 eine Kugel 7 angeordnet, deren Durchmesser etwas größer als die Wandstärke des hülsenförmigen Schaltbauteiles 2 ist.

Eine Steuerhülse 8 umschließt die beiden Schaltbauteile 1 und 2 konzentrisch und weist einen ersten Abschnitt 9 mit engerem Durchmesser, einen Übergang 10 und einen zweiten Abschnitt 11 mit weiterem Durchmesser und einen axialen Endanschlag 12 für das hülsenförmige Schaltbauteil 2 auf.

Es muß hier darauf hingewiesen werden, daß die Steuerhülse 8 in nicht näher dargestellter Weise im Getriebegehäuse stationär festgelegt werden muß, damit sie ihre entsprechende Funktion erfüllen kann.

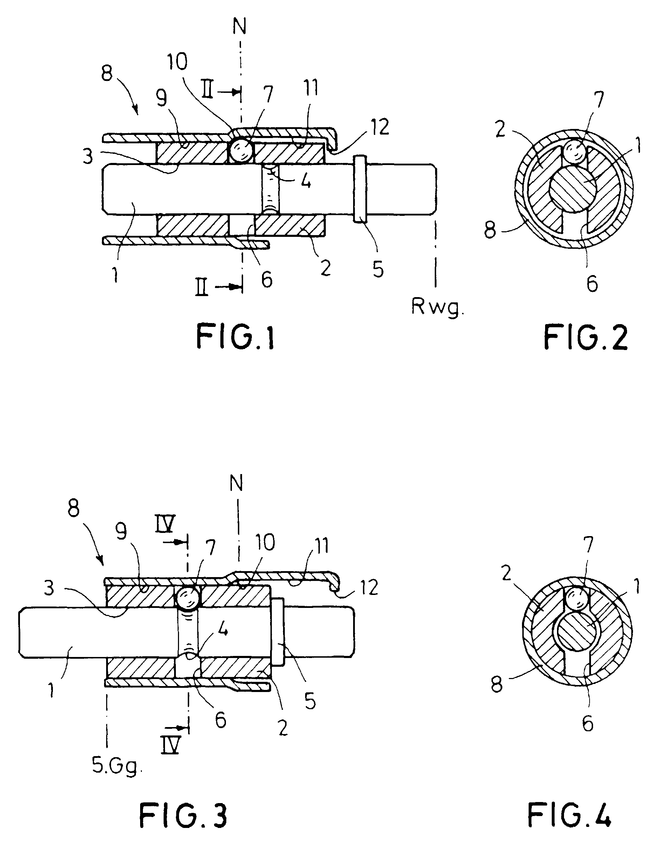

Im nachfolgenden wird nun beginnend mit Fig. 1 und übergehend nach Fig. 3 die Funktionsweise der erfindungsgemäßen Mitnahmekupplung in einem Schaltgestänge erläutert.

Die erfindungsgemäße Mitnahmekupplung in einem Schaltgestänge ist in den Figuren nur als ein Funktionsmodel dargestellt, das naturgemäß bei einer ausgeführten Schaltvorrichtung in einem Wechselgetriebe einen anderen komplexeren Aufbau aufweisen kann. Nichtsdestoweniger bleibt die Funktionsweise hierbei erhalten.

Die in Fig. 1 gezeigte Stellung, bei der das erste Schaltbauteil 1 mit seiner Raste 4 von der Kugel 7 entkuppelt ist und nach rechts außen verlagert ist, kann in einem tatsächlichen Schaltgestänge, z.B. der Stellung bei eingerücktem Rückwärtsgang, entsprechen. Wird nunmehr der Rückwärtsgang ausgerückt, so kann sich das Schaltbauteil 1 zunächst frei axial in dem zweiten hülsenförmigen Schaltbauteil 2 bewegen bis der Anschlag 5 gegen das hülsenförmige Schaltbauteil 2 anschlägt und dieses hierdurch mitnimmt. Genau in dieser Stellung kann auch die Kugel 7 in die Raste 4 am Schaltbauteil 1 einfallen bzw. wird durch eine weitere axiale Bewegung des Schaltbauteiles 1 durch den Übergang 10 vom weiten Abschnitt 11 zum engen Abschnitt 9 der Steuerhülse 8 dort hineingezwungen. Hierdurch erfolgt eine formschlüssige Verriegelung zwischen dem ersten Schaltbauteil 1 und dem zweiten hülsenförmigen Schaltbauteil 2, wodurch dieses nach links mitgenommen wird und bei einem Schaltgestänge in dieser Stellung, z.B. ein fünfter Gang, eingerückt würde.

Der Übergang 10 zwischen dem engen Abschnitt 9 und dem weiten Abschnitt 11 der Steuerhülse 8 bestimmt hierbei die Neutrallage des hülsenförmigen Schaltbauteiles.

Wird nun der fünfte Gang ausgerückt, so erfolgt eine gekuppelte Bewegung der Schaltbauteile 1 und 2 bis die Kugel 7 in den Übergang 10 an der Steuerhülse 8 gelangt und das hülsenförmige Schaltbauteil 2 durch den Endanschlag 12 in seiner weiteren Bewegung nach rechts begrenzt wird. Durch eine weitere Bewegung des ersten Schaltbauteiles 1 könnte nunmehr wieder der Rückwärtsgang eingerückt werden.

Es ist hierbei für den Fachmann selbstverständlich, daß er z.B. die Raste 4 für die Kugel 7 nicht unbedingt als Ringnut sondern auch nur als Kugelkalotte ausbilden kann und er in gleicher Weise den Anschlag 5 anstelle in Form eines Ringbundes nur, z.B. durch einen Kerbstift, ausbilden kann. Gleiches gilt für den Endanschlag 12 an der Steuerhülse, dieser kann selbstverständlich auch als ein getrennter Anschlag im Getriebegehäuse ausgebildet sein.

## Patentansprüche

1. Mitnahmekupplung in einem Schaltgestänge mit einem axial bewegbaren ersten Schaltbauteil (1), das über eine Kugel/Raste-Kupplung ein zweites, hülsenförmiges Schaltbauteil (2) fallweise mit betätigt,
**dadurch gekennzeichnet**, daß
- das erste axial bewegbare Schaltbauteil (1) mit einer Raste (4) für die in einer radialen Bohrung (6) im zweiten, hülsenförmigen Schaltbauteil (2) angeordnete Kugel (7) und mit einem Anschlag (5) für das zweite Schaltbauteil (2) bei Bewegung in einer Richtung versehen ist,
- konzentrisch zum zweiten, hülsenförmigen Schaltbauteil (2) eine Steuerhülse (8) ortsfest angeordnet ist, die einen ersten Abschnitt (9) mit engerem Durchmesser und einen zweiten Anschnitt (11) mit weiterem Durchmesser aufweist,
- ein Übergang (10) zwischen den Abschnitten (9 und 11) die Neutrallage (N) des zweiten Schaltbauteiles (2) festlegt und
- ein Endanschlag (12) für das zweite Schaltbauteil (2) bei Bewegung in der anderen Richtung vorgesehen ist.

## Claims

1. A driving coupling in a gearshift linkage, having an axially movable first gearshift component (1), which as the case may be co-actuates a second sleeve-type gearshift component (2) via a ball/notch coupling,
characterised in that
- the first axially movable gearshift component (1) is provided with a notch (4) for the ball (7) arranged in a radial bore (6) in the second sleeve-type gearshift component (2) and with a limit stop (5) for the second gearshift component (2) in the case of movement in one direction,
- a control sleeve (8) is arranged in stationary manner concentrically relative to the second sleeve-type gearshift component (2), said control sleeve (8) comprising a first portion (9) with a narrower diameter and a second portion (11) with a wider diameter,
- a transition point (10) between the portions (9 and 11) determines the neutral position (N) of the second gearshift component (2) and
- an end stop (12) for the second gearshift component (2) is provided in the case of movement in the other direction.

## Revendications

1. Accouplement entraîneur dans une tringle de sélection, comprenant un premier élément de sélection (1) axialement mobile qui actionne conjointement en cas de besoin, par l'intermédiaire d'un accouplement à cran d'arrêt et à bille, un deuxième élément de sélection (2) en forme de douille,
**caractérisé** en ce que
- le premier élément de sélection (1) axialement mobile est pourvu d'un cran d'arrêt (4) pour la bille (7) qui est disposée dans un perçage radial (6) dans le deuxième élément de sélection (2) en forme de douille, et d'une butée (5) pour le deuxième élément de sélection (2) en cas de déplacement dans une première direction,
- une douille de commande (8) est disposée stationnairement concentriquement au deuxième élément de sélection (2) en forme de douille, et elle présente un premier tronçon (9) de diamètre plus étroit et un deuxième tronçon (11) de diamètre plus large,
- une transition (10) entre les tronçons (9 et 11) définit la position neutre (N) du deuxième élément de sélection (2), et
- une butée finale (12) est prévue pour le deuxième élément de sélection (2) en cas de déplacement dans l'autre direction.
